Europäisches Patentamt

European Patent Office

Office européen des brevets

(19)

(11) Numéro de publication : **0 040 384**
**B1**

(12) FASCICULE DE BREVET EUROPÉEN

(45) Date de publication du fascicule du brevet :
26.03.86

(51) Int. Cl.⁴ : **H 02 G   1/02**

(21) Numéro de dépôt : **81103578.1**

(22) Date de dépôt : **11.05.81**

(54) Ensemble de verrouillage-déverrouillage d'un câble sur un capot d'isolateur.

(30) Priorité : **16.05.80 FR 8011015**

(43) Date de publication de la demande :
**25.11.81 Bulletin 81/47**

(45) Mention de la délivrance du brevet :
**26.03.86 Bulletin 86/13**

(84) Etats contractants désignés :
**AT DE FR GB IT SE**

(56) Documents cités :
**CH-A-   363 692**
**FR-A-   403 587**
**FR-A- 1 272 161**
**FR-A- 1 272 546**
**FR-A- 2 207 337**
**FR-A- 2 426 318**
**FR-E-    78 750**
**US-A- 2 329 391**

(73) Titulaire : **CERAVER Société anonyme dite:**
**12, rue de la Baume**
**F-75008 Paris (FR)**

(72) Inventeur : **Willem, Michel**
**Champ Coutay Abrest**
**F-03200 Vichy (FR)**
Inventeur : **Gamet, Lucien**
**Lotissement Bellevue**
**F-03270 Saint-Yorre (FR)**

(74) Mandataire : **Weinmiller, Jürgen et al**
**Zeppelinstrasse 63**
**D-8000 München 80 (DE)**

**Description**

La présente invention concerne un ensemble de verrouillage-déverrouillage d'un câble logé dans un berceau prévu dans un capot d'isolateur, ce capot présentant sensiblement un plan de symétrie par rapport à l'axe du berceau et étant muni :

— d'une cale pour maintenir ledit câble dans son berceau,

— d'un attache élastique de ladite cale constituée par un fil métallique recourbé de manière à former une branche frontale et deux branches latérales dont les extrémités sont solidarisées à ladite cale,

— d'un ergot saillant présentant une face interne au capot, une face externe, et une face inférieure définissant sur la paroi du capot un logement parallèle audit berceau pour la branche frontale de ladite attache en position de verrouillage.

On connaît par le document FR-A 2 426 318 un capot d'isolateur tel que spécifié ci-dessus.

Le capot présente une gorge formant berceau destiné à recevoir le câble ; une pièce mobile constituée par une cale est articulée sur le capot par une attache élastique clipsée sur un ergot et autorisant ainsi un verrouillage du câble dans son berceau.

La présente invention a pour but de réaliser un ensemble permettant le verrouillage et le déverrouillage aisés à distance d'un câble sur un tel capot d'isolateur.

Des outils tels que décrits dans les documents FR-A 403 587 et 1 272 161 ne sont pas adaptés à un tel capot.

Le but de l'invention tel que défini ci-dessus est atteint par l'ensemble tel qu'il est caractérisé dans la revendication 1. Au sujet de certaines mises en œuvre préférées de l'invention, référence est faite aux sous-revendications.

L'invention sera décrite ci-après plus en détail à l'aide de plusieurs exemples de réalisation et du dessin donné à titre illustratif mais nullement limitatif dans lequel :

— les figures 1 et 2 sont des vues en perspective d'un ensemble selon l'invention respectivement au cours des opérations de verrouillage et de déverrouillage.

— les figures 3A et 3B illustrent respectivement de profil et de face un outil de verrouillage et un outil de déverrouillage appartenant à l'ensemble selon les figures 1 et 2.

— les figures 4A et 4B sont des vues partielles respectivement de profil et de face d'un outil de verrouillage variante par rapport à l'outil de la figure 3A.

— les figures 5A et 5B sont des vues partielles analogues à celles des figures 4A et 4B mais concernent l'outil de déverrouillage.

— la figure 6 est une vue en perspective éclatée d'un autre outil de verrouillage isolant appartenant à un ensemble selon l'invention.

— la figure 7 est une vue en élévation partiellement coupée de l'outil de la figure 6 après le montage de ses éléments constitutifs.

— les figures 8 et 9 sont des vues en coupe selon la ligne VIII-VIII de la figure 7 montrant respectivement l'outil en position de repos et en position de travail.

— la figure 10 montre une bande élastique constituant une variante de réalisation de la bande apparaissant dans la figure 6.

— la figure 11 montre un ergot associé à la bande de la figure 10.

— la figure 12 montre en perspective une variante d'une pièce appartenant à l'outil isolant de la figure 6.

— la figure 13 est une vue d'ensemble semi-coupée d'une variante d'outil de verrouillage-déverrouillage appartenant à un ensemble selon l'invention.

— la figure 14 montre un détail selon la ligne de coupe XIV-XIV de la figure 13.

— la figure 15 est une vue en élévation selon la direction XV de la figure 13.

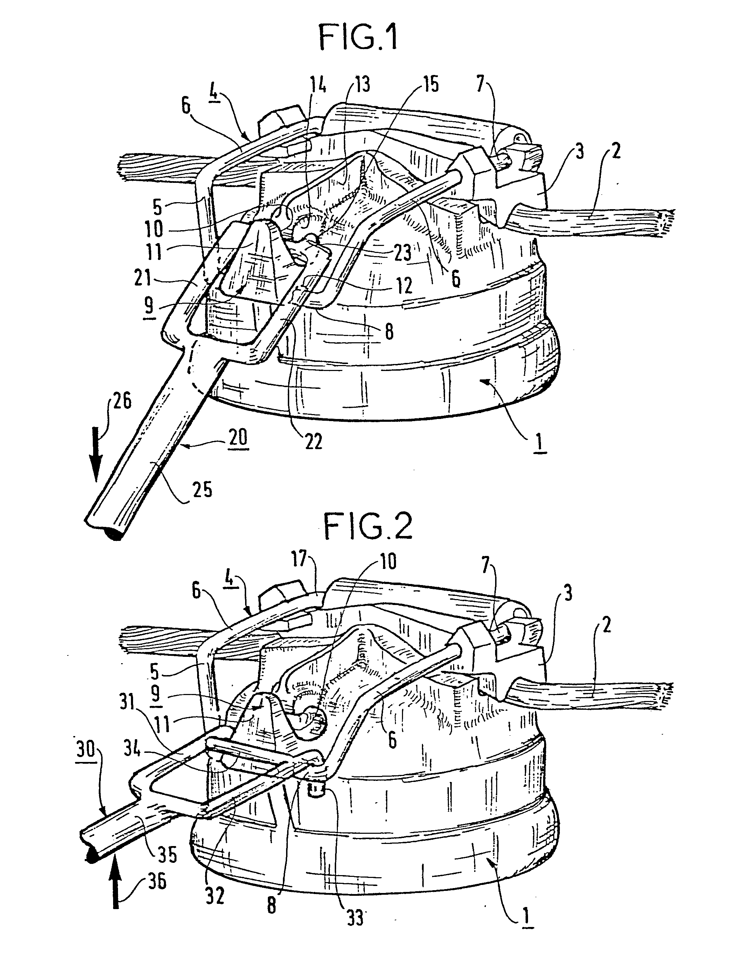

On voit sur les figures 1 et 2 un capot d'isolateur 1 en métal, ou alliage métallique, destiné à supporter un câble 2 ; ce câble est logé dans un berceau en forme d'une portion de cylindre épanouie aux extrémités ; le capot présente un plan de symétrie sensiblement orthogonal à l'axe de ce berceau.

Le câble est maintenu dans son berceau par une cale longitudinale 3, qui peut être métallique ou isolante, associée à une attache élastique 4. Cette attache, constituée par exemple d'un fil métallique recourbé, présente une branche frontale 8 et deux branches latérales 5 et 6 dont les extrémités sont repliées et solidarisées à la cale 3. On a référencé 7 une portion visible de l'extrémité de la branche latérale 6. Le capot est muni d'un premier ergot saillant 9 présentant une face interne 10 en regard du capot, une face externe 11 et une face inférieure 12 en forme de portion de cylindre définissant avec la paroi du capot un logement pour la branche frontale 8 de l'attache élastique. Le capot présente en outre une nervure centrale 13 située sensiblement dans son plan de symétrie et se terminant par un second ergot saillant 14. Ce dernier définit avec la face interne 10 de l'ergot saillant 9 un logement sensiblement cylindrique 15, parallèle au berceau du câble 2.

L'ensemble selon l'invention comporte un outil de verrouillage 20 (figure 1) et un outil de déverrouillage 30 (figure 2) coopérant avec les ergots et l'attache élastique associés au capot pour réaliser un verrouillage et un déverrouillage aisés du câble 2 dans son berceau.

L'outil de verrouillage 20 comprend essentiellement un manche 25 se terminant par deux tiges latérales 21 et 22 réunies par une tige transversale 23. Les dimensions de l'ergot 9, du logement 15, l'écartement des branches 5 et 6, et celui des tiges 21 et 22 sont choisis de façon que la tige transversale 23, après glissement sur la nervure 13, tombe dans le logement 15 et que les tiges 21 et 22 puissent se trouver de part et d'autre de l'ergot 9, appliquées sur deux portions de la branche frontale 8 de l'attache 4.

Le jeu latéral est choisi de manière à autoriser une mise en place aisée de l'outil 20 tout en permettant son guidage entre les branches 5 et 6 de l'attache. On conçoit que, par un mouvement de l'outil 20 de haut en bas schématisé par la flèche 26, la tige transversale 23 est maintenue en appui contre la face interne 10 de l'ergot 9 dans le logement 15, et les tiges transversales 21 et 22 viennent loger la branche frontale 8 de l'attache élastique 4 sous l'ergot 9 dans le logement 12.

L'outil de déverrouillage 30 comporte schématiquement un manche 35 terminé par deux tiges latérales 31 et 32 dont les extrémités recourbées forment deux crochets 33 dont un seul apparaît sur la figure. Une tige transversale 34 réunit les tiges latérales 31 et 32. L'écartement de ces dernières est choisi, comme pour l'outil de verrouillage, en fonction des dimensions de l'ergot 9 et de l'écartement des branches latérales 5 et 6 de l'attache.

Pour réaliser la manœuvre de déverrouillage, on dispose les crochets des tiges 31 et 33 sur la branche frontale 8 de l'attache de part et d'autre de l'ergot 9 de manière que la face externe 11 de cet ergot serve de guidage et d'appui pour la tige transversale 34. Par un mouvement de bas en haut schématisé par la flèche 36, on voit qu'il est possible de sortir aisément du logement 12 la branche frontale 8 de l'attache.

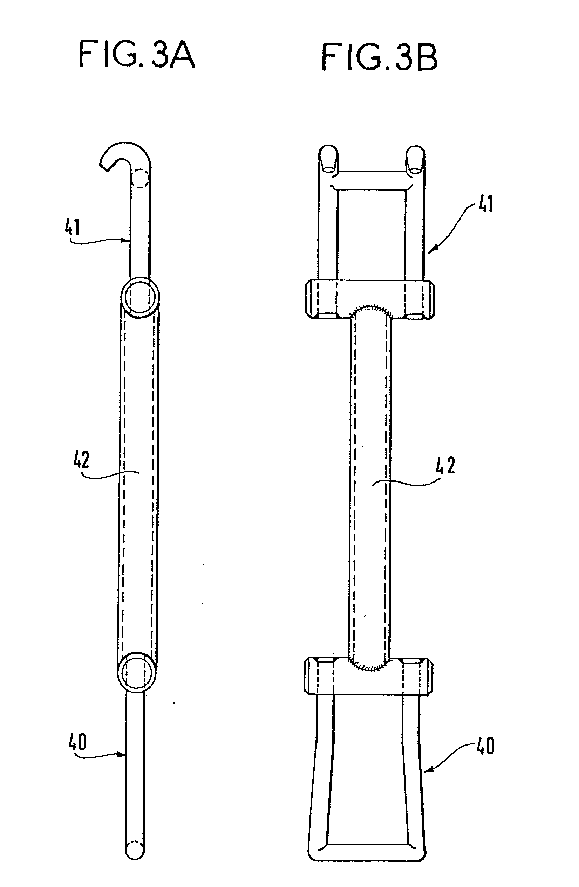

On a représenté dans les figures 3A et 3B un outil de verrouillage 40 et un outil de déverrouillage 41, analogues respectivement aux outils 20 et 30 des figures 1 et 2. Ils sont métalliques et disposés aux deux extrémités d'un manche commun 42 ; la longueur de ce dernier peut être de l'ordre d'une vingtaine de centimètres.

Pour des manœuvres à distance, les outils sont disposés sur des perches beaucoup plus longues que le manche précédent et généralement isolantes.

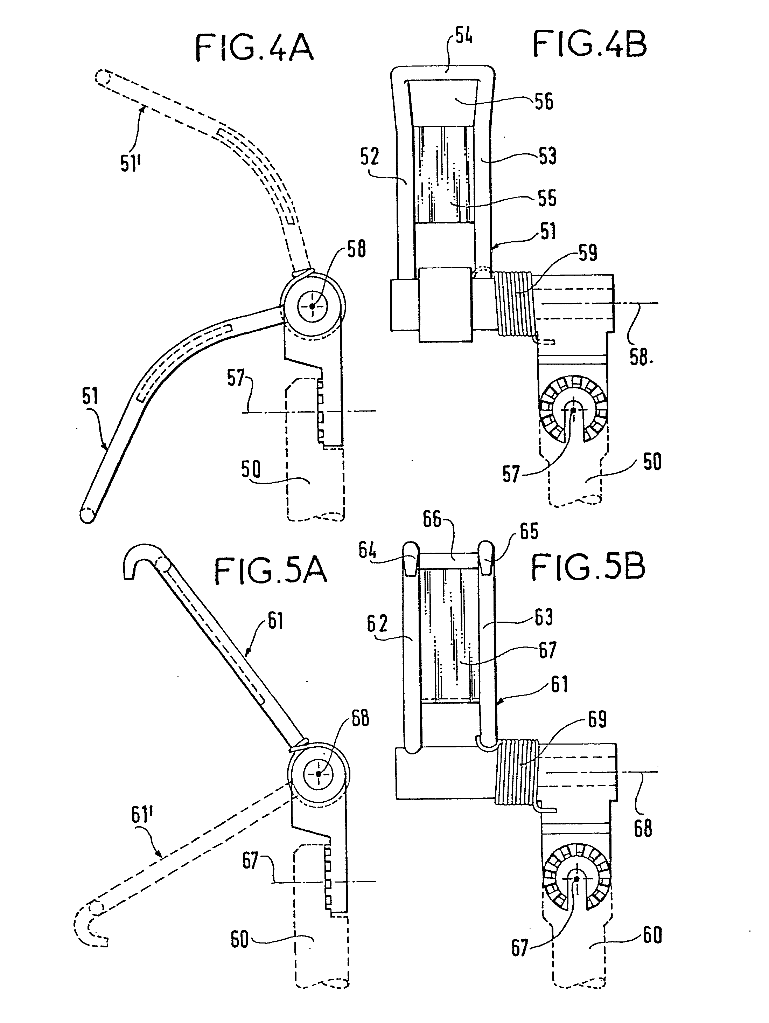

On voit sur les figures 4A et 4B un outil de verrouillage métallique 51 monté sur une perche isolante 50 dont on ne voit qu'une extrémité. On retrouve les deux tiges latérales 52, 53 et la tige transversale 54. Une plaque métallique 55 est solidarisée aux tiges latérales 52 et 53, de manière à renforcer l'outil et à faciliter son guidage sur la nervure centrale 13 du capot 1. Une ouverture 56 est prévue entre cette plaque 55 et la tige transversale 54 pour laisser un passage pour l'ergot 9. L'outil est par ailleurs relié à la perche 50 par un système mécanique le rendant mobile en rotation, d'une part autour d'un axe 57, et d'autre part autour d'un axe 58 orthogonal à l'axe 57.

La position de repos de l'outil de verrouillage 51 apparaît en trait plein dans la figure 4A ; sa position de travail (référencée 51') apparaît en trait pointillé. Un ressort de rappel 59 le faisant tourner autour de l'axe 58 le fait passer de sa position de travail à sa position de repos. Il est en effet plus aisé pour un opérateur effectuant une manœuvre à distance de disposer de ces deux positions de l'outil.

D'une manière analogue on a illustré dans les figures 5A et 5B un outil de déverrouillage 61 dans sa position de repos et dans sa position de travail 61'. Les positions de repos et de travail sont inversées par rapport à celles de l'outil de verrouillage. L'outil 61 comporte deux tiges latérales 62 et 63 terminées par deux crochets 64 et 65, et réunies par une tige transversale 66 et une plaque 67. Cette plaque permet d'éviter, lors d'une manœuvre à distance que l'ergot 9 ne s'introduise entre les tiges 62 et 63. On a référencé en outre la perche 60, l'axe 67 de rotation de l'outil 61 autour de la perche, l'axe 68 de rotation sous l'effet du ressort 69.

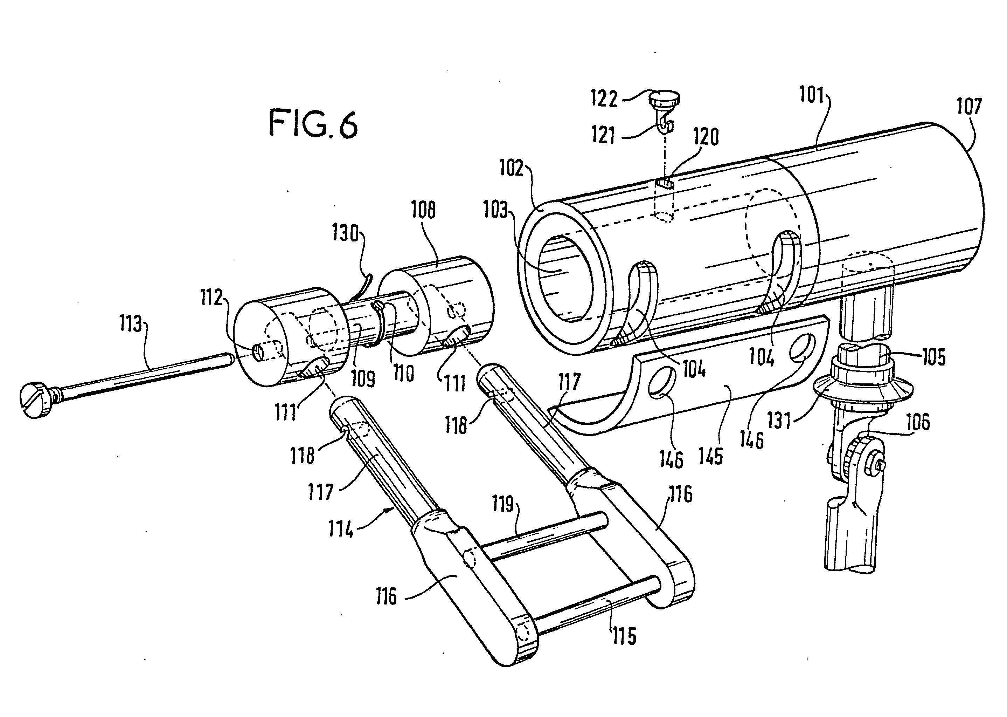

Les figures 6 à 12 concernent des outils de verrouillage isolants appartenant à un autre ensemble toujours selon l'invention. Les outils de déverrouillage s'en déduisent aisément compte tenu des indications précédentes. L'outil de verrouillage de la figure 6 comporte un jonc isolant 101 en résine et fibres de verre, revêtu d'une gaine 102 adhérente et en une matière souple isolante, résistant bien à l'érosion et au cheminement, telle que par exemple l'EPDM ou le caoutchouc de silicone. Le jonc 101 est un cylindre qui a pour longueur environ 150 mm, comme diamètre environ 40 mm ; la gaine 102 a une épaisseur d'environ 2,5 mm. Le jonc 101 est évidé à une extrémité seulement sur environ 80 mm de profondeur selon un logement cylindrique 103 de diamètre 25 mm environ, ayant même axe que le jonc 101.

En outre, le jonc 101 est usiné dans sa partie devenue tubulaire suivant deux lumières 104.

Le jonc 101 est aussi percé près de l'autre extrémité d'un trou borgne profond de 30 mm environ, d'axe perpendiculaire à celui du jonc 101 et de diamètre 16,5 mm environ.

Dans ce trou on emmanche et on colle un jonc 105 gainé, de diamètre 16 mm environ, et dont l'extrémité est scellée dans une douille 106 dont l'extrémité aplatie et garnie de cannelures est prévue pour pouvoir être fixée sur l'extrémité de la perche isolante partiellement représentée. Le jonc gainé 105 peut comporter une ailette en élastomère 131, ce qui augmente la tension de contournement de l'outil par allongement de la ligne de fuite et de la ligne d'arc.

L'extrémité 107 du jonc 101 est revêtue d'un disque en même matière souple isolante que la gaine 102 sur laquelle elle est collée (disque non représenté).

Une pièce 108 a un diamètre très légèrement inférieur à celui de l'évidement 103 du jonc 101 pour pouvoir tourner librement à l'intérieur de celui-ci ; la partie centrale de la pièce 108 est usinée pour former une gorge 109 ; le fond de gorge est cylindrique et de diamètre 15 mm environ. Il est percé d'un trou borgne qui reçoit un téton 110 d'environ 5 mm de diamètre. La pièce 108 est en matière isolante autolubrifiante telle que natène ou PTFE.

La pièce 108 est aussi percée de deux trous borgnes 111 profonds de 25 mm environ et de diamètre 12,5 mm environ, trous dont l'axe est perpendiculaire à l'axe de la pièce 108. On perce aussi la pièce 108 d'un trou borgne 112 parallèle à l'axe de la pièce 108, de 5 mm de diamètre environ, et qui débouche partiellement dans les trous 111 ; ce trou 112 est destiné à recevoir une clavette 113 en matière isolante, nylon par exemple.

Une pièce 114 comporte un axe 115 solidaire de deux douilles 116 ; l'axe et les douilles peuvent être métalliques sans que cela soit obligatoire. Deux joncs 117 en résine et fibres de verre, de 12 mm de diamètre environ sont scellés respectivement dans les douilles 116, et comportent chacune une encoche 118 de rayon égal à celui de la clavette 113 ; ils sont avantageusement gainés près des douilles 116 en EPDM (ou élastomère silicone ou analogue). La pièce 114 est raidie par une entretoise 119.

On prévoit également un bouclier 145 en matériau isolant, résistant bien à l'érosion et au cheminement, présentant la forme d'une portion de cylindre, et susceptible de s'appliquer sur le jonc 101 ; ce bouclier présente deux trous 146 dans lesquels sont susceptibles d'être enfilées et fixées les gaines des joncs 117 ; il joue également un rôle d'entretoise de raidissement pour la pièce 114. Pour effectuer le montage de l'ensemble formant l'outil isolant, on munit tout d'abord la gorge 109 de la pièce 108 d'une bague élastique 130 tendue et retenue à chaque extrémité par le téton 110. On enfonce la pièce 108 dans le logement 103 du jonc 101. On enfile le bouclier 145 sur les joncs 117.

Par les lumières 104 on enfonce dans les trous 111 de la pièce 108 les joncs 117. On rend solidaire la pièce 108 du jonc 101 au moyen de la clavette 113 enfoncée dans le trou 112 et qui prend sa place dans les encoches 118 des joncs 112.

On amène les joncs 117 par rotation aux extrémités supérieures des lumières 104 ; dans cette position le téton 110 de la pièce 108 vient en face d'un regard 120 de la partie tubulaire du jonc 101. Au moyen d'un crochet on sort par le regard 120 une extrémité de la bague élastique disposée sur la gorge 109 et on la place dans l'encoche 121 d'un téton 122 en matière isolante, telle que le nylon, et à épaulement.

Ce téton est plaqué sur l'outil par l'effet de la bague élastique. Le rôle de la bague élastique est de maintenir au repos l'outil 114 en position basse, ce qui est favorable pour l'exécution de la manœuvre d'ouverture.

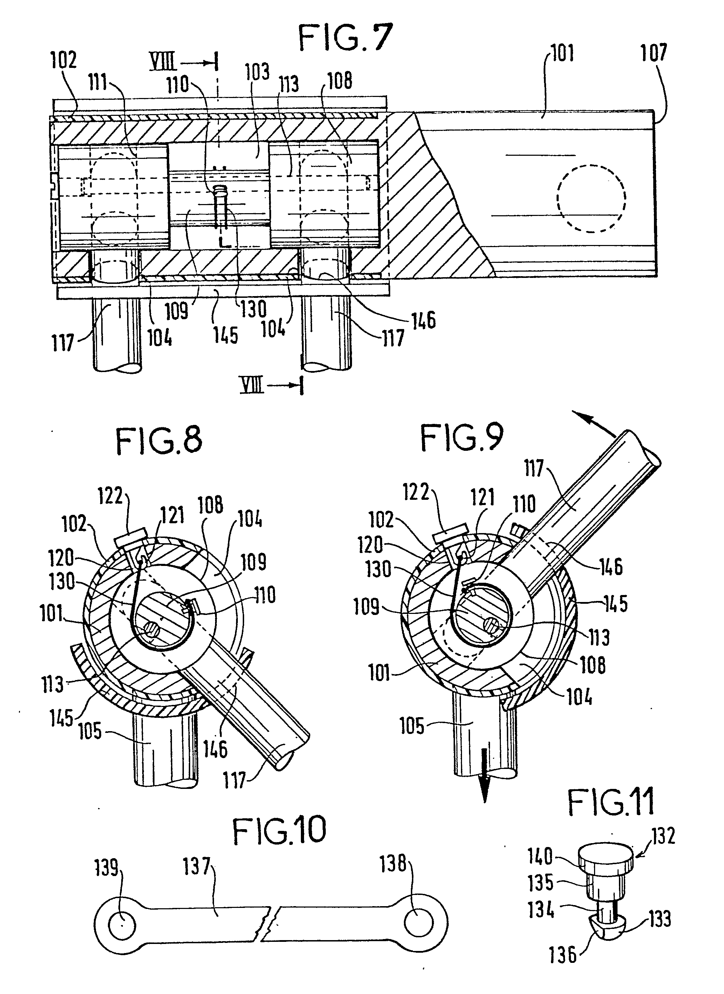

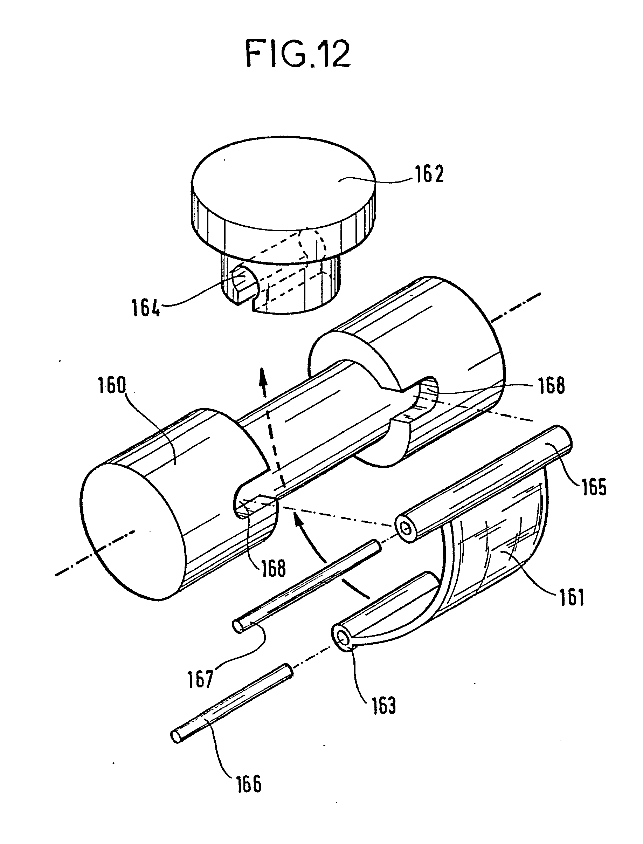

Si l'on désire une force d'appel plus importante, la bague élastique 130 peut être remplacée par une bande de caoutchouc 137 représentée par la figure 10. Cette bande est percée à une extrémité d'un trou 138 pour le téton 110 et à l'autre extrémité d'un trou 139 pour le téton 122 qui vient dans le logement 120. Le téton peut dans ce cas présenter une forme sensiblement de révolution conforme au mode de réalisation de la figure 11. Le téton 132 comporte une partie inférieure 133 sensiblement hémisphérique, sauf au niveau d'un plat 136 pour le passage du caoutchouc dans le logement 120 ; il comporte ensuite une partie cylindrique 134 de diamètre voisin de celui du téton 110, puis une partie cylindrique 135 de diamètre à peine inférieur à celui du logement 120, puis une collerette 140 de diamètre un peu supérieur à celui du logement 120 (dans ce cas le logement 120 est avantageusement cylindrique).

Le diamètre maximum de la partie 133 du téton 132 peut avantageusement être un peu plus grand que le diamètre du trou 139 de façon que le caoutchouc serre sur la partie 134 du téton 132. La bague de caoutchouc 137 peut être renforcée à chaque extrémité par collage d'un disque de caoutchouc non représenté, et ceci préalablement au découpage à l'emporte-pièce des trous 138 et 139.

La figure 12 illustre une pièce 160 constituant une variante de réalisation de la pièce 108 de la figure 6 et un téton 162 constituant une variante de réalisation du téton 122 de la figure 6. La pièce 160 comporte deux logements demi-cylindriques 168 orthogonaux à son axe. Le rappel élastique est assuré par la bande élastique 161 représentée à la figure 12. Cette bande en caoutchouc ou élastomère présente deux talons extrêmes 163 et 165 susceptibles d'être renforcés respectivement par deux fils de nylon 166 et 167. La bande a une largeur telle qu'elle s'adapte dans la partie centrale usinée de la pièce 160. Le talon 165 s'engage dans les deux logements 168 et le talon 163 s'engage dans le logement 164 prévu dans le téton 162.

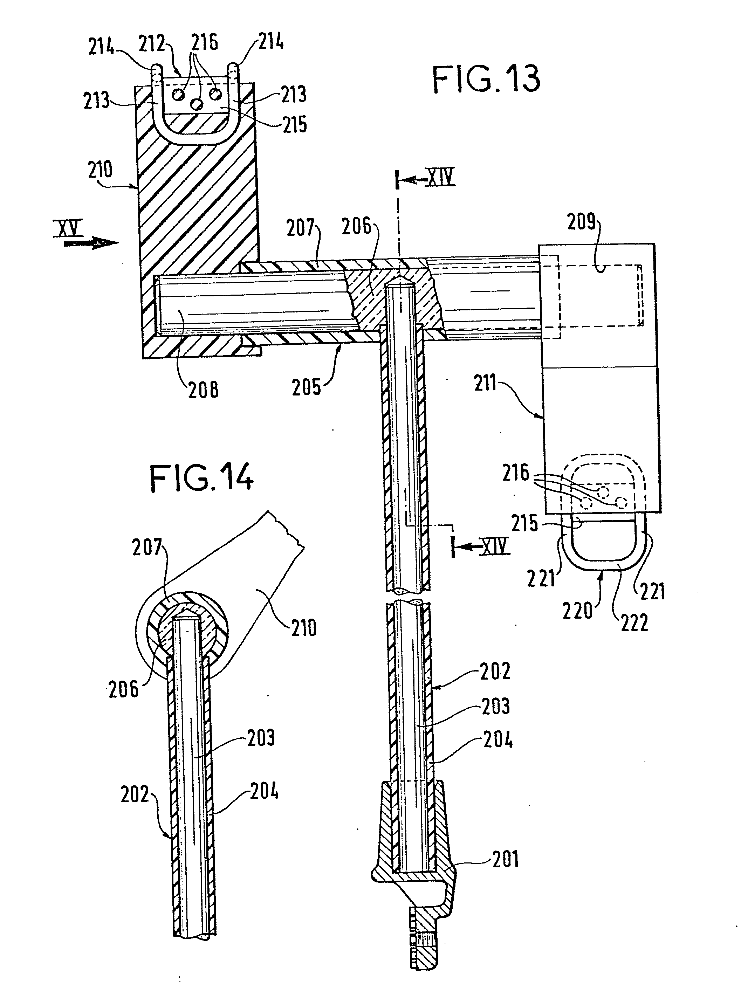

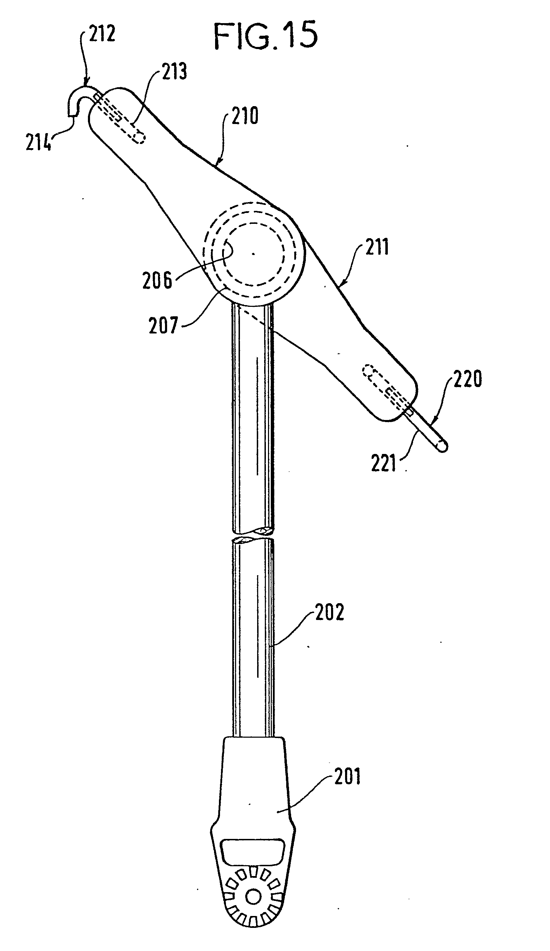

On voit sur les figures 13 et 15 un manche 202 constitué par un jonc 203 en fibres de verre et résine, et recouvert d'une gaine en élastomère 204, monté dans un embout 201 d'une perche isolante universelle (cet embout permet de faire varier l'angle formé par l'axe de la perche et l'axe du manche 2). Le jonc 203 est emboîté et collé dans le jonc 206 d'un barreau 205 qui lui est perpendiculaire. Le jonc 206 est muni d'une gaine 207 en élastomère, tel que l'EPDM, sauf au niveau de ses extrémités 208 et 209 sur lesquelles ont été respectivement fixés deux blocs supports 210 et 211 en matériau isolant élastique, tel que l'EPDM. Cette fixation a pu être effectuée par exemple par injection de l'EPDM sur les extrémités 208 et 209. Un bloc 210 sert de support à l'outil de déverrouillage 212 comportant notamment deux tiges latérales 213 se terminant en crochets 214 et reliées par une plaquette transversale 215 percée de trous 216. L'outil de déverrouillage est disposé dans le moule comme insert au moment du moulage du bloc 210 ; le matériau isolant pénètre alors dans les trous 216 pour faire ancrage. Il en est de même pour l'outil de verrouillage 220 comportant deux tiges latérales 221 et une tige transversale 222 et ancré dans le bloc 211.

Au moment des manœuvres d'ouverture et de fermeture effectuées de la même manière qu'avec les outils 20 et 30 des figures 1 et 2, c'est l'élasticité des blocs 210 et 211 qui fait tourner le plan des outils 212 et 220 autour de l'axe du jonc 206. On voit que le dispositif selon l'invention ne comporte aucune pièce mobile et qu'il est complètement protégé de l'humidité extérieure de manière étanche par un matériau isolant. Sa réalisation est plus simple et moins coûteuse que les réalisations antérieures.

Bien entendu l'invention n'est pas limitée au mode de réalisation qui vient d'être décrit. En particulier les deux outils peuvent être indépendants l'un de l'autre en étant solidarisés à deux barreaux isolants indépendants, pouvant ou non être montés ensemble sur une perche unique.

**Revendications**

1. Ensemble de verrouillage-déverrouillage d'un câble (2) logé dans un berceau prévu dans un capot d'isolateur (1), ce capot présentant sensiblement un plan de symétrie par rapport à l'axe du berceau et étant muni :
— d'une cale (3) pour maintenir ledit câble (2) dans son berceau,
— d'une attache élastique (4) de ladite cale constituée par un fil métallique recourbé de manière à former une branche frontale (8) et deux branches latérales (5, 6) dont les extrémités (7) sont solidarisées à ladite cale (3),
— d'un ergot saillant (9) présentant une face (10) interne au capot, une face externe (11), et une face inférieure définissant sur la paroi du capot (1) un logement (12) parallèle audit berceau pour la branche frontale (8) de ladite attache (4) en position de verrouillage,
ensemble caractérisé par le fait qu'il comporte, monté sur une perche :
— un outil de verrouillage (20) comportant des tiges latérales (21, 22), dont l'écartement est suffisant pour qu'elles puissent s'appuyer sur deux portions de ladite branche frontale (8) de l'attache (4) situées de part et d'autre dudit ergot saillant (9), tiges dont les extrémités sont réunies par une tige transversale (23) dont l'épaisseur permet son introduction contre la face interne (10) de guidage et d'appui dudit ergot saillant (9),
— et un outil de déverrouillage (30) comportant des tiges latérales (31, 32) se terminant respectivement par deux crochets latéraux (33) dont l'écartement est suffisant pour qu'ils puissent s'agripper sur lesdites deux portions de ladite branche frontale (8) de l'attache (4) situées de part et d'autre dudit ergot saillant (9), lesdites tiges latérales (31, 32) étant par ailleurs réunies par une tige transversale (34) située vis-à-vis desdits crochets à un niveau tel qu'elle puisse venir en appui sur la face externe (11) de guidage et d'appui dudit ergot saillant (9).

2. Ensemble selon la revendication 1, caractérisé par le fait que ledit capot (1) présente dans son plan de symétrie un second ergot saillant coopérant avec ledit ergot saillant (14) pour définir un logement (15) parallèle audit berceau et que l'épaisseur de ladite tige transversale (23) dudit outil de verrouillage (20) est telle que cette tige puisse être introduite dans ledit logement.

3. Ensemble selon la revendication 1, caractérisé par le fait que lesdites tiges latérales (52, 53) dudit outil de verrouillage (51) sont réunies en outre par une plaque (55) laissant entre elle et ladite tige transversale (54) un passage (56) pour ledit ergot saillant (9).

4. Ensemble selon la revendication 1, caractérisé par le fait que lesdits crochets latéraux (64, 65) dudit outil de déverrouillage (63) sont réunis en outre par une plaque (67) interdisant le passage de ladite tige transversale (66) de cet outil contre la face interne (10) dudit ergot saillant (9).

5. Ensemble selon la revendication 1, caractérisé par le fait que ledit outil de verrouillage est monté sur un support d'axe (58) solidarisé à ladite perche (50), et qu'il présente une position de travail (51') et une position de repos (51), cette dernière faisant un angle aigu avec la perche (50) grâce au rappel d'un ressort (59) qui fait tourner ledit outil autour dudit axe (58).

6. Ensemble selon la revendication 1, caractérisé par le fait que ledit outil de déverrouillage est monté sur un support d'axe (68) solidarisé à ladite perche (60), et qu'il présente une position de travail (61') et une position de repos (61), cette dernière faisant un angle obtus avec la perche (60) grâce au rappel d'un ressort (69) qui fait tourner ledit outil autour dudit axe (68).

7. Ensemble selon l'une des revendications 5 et 6, caractérisé par le fait que ledit support est en matériau isolant et qu'il est formé d'une pièce extérieure solidaire de ladite perche présentant un logement interne cylindrique (103) contenant une pièce intérieure (108) de même axe et par le fait que lesdites tiges transversales (117) dudit outil passent à travers des lumières (104) ménagées dans ladite pièce extérieure et sont ancrées dans ladite pièce intérieure (108) orthogonalement audit axe, une bande élastique (130) fixée d'une part à ladite pièce intérieure (108) et d'autre part à ladite pièce extérieure autorisant un mouvement de rotation dudit outil autour dudit axe entre une position de travail et une position de repos.

8. Ensemble selon la revendication 7, caractérisé par le fait que les parties desdites tiges transversales ancrées dans ladite pièce intérieure (108) sont constituées par des joncs isolants (117).

9. Ensemble selon la revendication 7, caractérisé par le fait que ladite bande élastique est fixée à ladite pièce extérieure par l'intermédiaire d'un téton (122) accessible de l'extérieur dudit support.

10. Ensemble selon l'une des revendications 5 et 6, caractérisé par le fait que ledit outil de verrouillage et/ou ledit outil de déverrouillage est solidaire d'un bloc (210, 211) en matériau isolant élastique fixé à une extrémité d'un barreau isolant (205) lui-même lié à une extrémité d'une perche isolante (202), ledit bloc élastique définissant une position de repos et une position de travail pour ledit outil.

11. Ensemble selon la revendication 10, caractérisé par le fait que ledit bloc (210, 211) est surmoulé sur l'extrémité dudit barreau isolant (205) et sur ledit outil de verrouillage (220) et/ou déverrouillage (212) formant insert.

12. Ensemble selon la revendication 10, caractérisé par le fait que ledit barreau (205) est constitué par un jonc (206) en fibres de verre agglomérées muni d'une gaine (207) en un matériau isolant.

13. Ensemble selon l'une des revendications 10 à 12, caractérisé par le fait qu'il comporte un outil de verrouillage et un outil de déverrouillage solidarisés respectivement aux deux extrémités d'un même barreau (205) isolant lui-même lié à une extrémité d'une perche isolante (202).

**Claims**

1. An equipment for clamping and unclamping a cable (2) housed in a housing of an insulator cap (1), this cap presenting substantially a plane of symmetry with respect to the axis of the housing and being provided with :
— a chock (3) for keeping said cable (2) in its housing,
— a resilient clip (4) of said chock constituted by a metal wire bent to form a front branch (8) and two side branches (5, 6) whose ends (7) are made fast with said chock (3),
— a protruding stud (9) presenting one surface (10) on the inside of the cap, an outer surface (11), and a lower surface defining on the wall of the cap (1) a recess (12) parallel to said housing for the front branch (8) of said clip (4) in the clamping position,
equipment characterized in that it comprises, mounted on a rod :
— a clamping tool (20) comprising side rods (21, 22), the space between which is sufficient so that they can be pressed against two portions of said front branch (8) of the clip (4) situated on either side of the protruding stud (9), the ends of the rods being interconnected by a transversal rod (23), the thickness of which permits its introduction against the inner guide and pressing surface (10) of said protruding stud (9),
— and an unclamping tool (30) comprising side rods (31, 32) ending respectively in two side hooks (33), the distance between which is sufficient so that they can hook on said two portions of said front branch (8) of the clip (4) situated on either side of said protruding stud (9), said side rods (31, 32) being further interconnected by a transversal rod (34) situated facing said hooks at a level such that it can press against the outer guide and pressing surface (11) of said protruding stud (9).

2. An equipment according to claim 1, characterized in that said cap (1) presents, in its plane of symmetry, a second protruding stud cooperating with said protruding stud (14) for defining a housing (15) parallel to said housing and that the thickness of said transversal rod (23) of said clamping tool (20) is such that this rod can be introduced into said housing.

3. An equipment according to claim 1, characterized in that said side rods (52, 53) of said clamping tool (51) are further interconnected by a plate (55), a passage (56) for said protruding stud (9) remaining between said plate and said transversal rod (54).

4. An equipment according to claim 1, characterized in that said side hooks (64, 65) of said unclamping tool (63) are moreover interconnected by a plate (67) preventing said transversal rod (66) of said tool from passing against the inner surface (10) of said protruding stud (9).

5. An equipment according to claim 1, characterized in that said clamping tool ist mounted on an axis support (58) fixed to said rod (50), and in that it presents a working position (51') and a rest position (51), the latter making an acute angle with the rod (50) due to the force of a spring (59) which makes said tool turn around said axis (58).

6. An equipment according to claim 1, characterized in that said unclamping tool is mounted on an axis support (68) fixed to said rod (60), and in that it presents a working position (61') and a rest position (61), the latter making an obtuse angle with the rod (60) due to the force of a spring (69), which makes said tool turn around said axis (68).

7. An equipment according to one of claims 5 und 6, characterized in that said support is made of an insulating material and in that it is formed of an outer piece fixed to said rod and presenting an inner cylindrical housing (103) containing an inner coaxial piece (108), and in that said transversal rods (117) of said tool pass through openings (104) in said outer piece and are anchored in said inner piece (108) orthogonally to said axis, an elastic band (130) fixed on the one hand to said inner piece (108) and on the other hand to said outer piece authorizing a rotation movement of said tool around said axis between a working position and a rest position.

8. An equipment according to claim 7, characterized in that the parts of said transversal rods which are anchored in said inner piece (108) are constituted by insulating rods (117).

9. An equipment according to claim 7, characterized in that said elastic band is fixed to said outer piece via a knob (122) which is accessible from the outside of said support.

10. An equipment according to one of claims 5 and 6, characterized in that said clamping toll and/or said unclamping tool is fixed to a block (210, 211) of elastic insulating material fixed to one end of an insulating bar (205) itself connected to an end of an insulating rod (202), said elastic block defining a rest position and a working position for said tool.

11. An equipment according to claim 10, characterized in that said block (210, 211) is moulded over the end of said insulating bar (205) and on said clamping tool (220) and/or unclamping tool (212) forming an insert.

12. An equipment according to claim 10, characterized in that said bar (205) is constituted by a rod (206) of agglomerated glass fibers supplied with an envelope (207) of insulating material.

13. An equipment according to one of claims 10 to 12, characterized in that it comprises a clamping tool and an unclamping tool which are fixed respectively to the two ends of the same insulating bar (205) which is itself connected to one end of an insulating rod (202).

**Patentansprüche**

1. Verriegelungs-Entriegelungsanordnung für ein Kabel (2), das in einem in einer Isolatorkappe (1) vorgesehenen Bett angeordnet ist, wobei diese Kappe im wesentlichen eine Symmetrieebene in bezug auf die Achse des Betts aufweist und versehen ist mit :

— einem Druckstück (3), um das Kabel (2) in seinem Bett zu halten,

— einer elastischen Halterung (4) für das Druckstück bestehend aus einem so gekrümmten Metalldraht, daß er einen stirnseitigen (8) und zwei seitliche Arme (5, 6) bildet, deren Enden (7) fest mit dem Druckstück (3) verbunden sind,

— einem vorstehenden Höcker (9) mit einer inneren zur Kappe zeigenden Seite (10), einer äußeren Seite (11) und einer unteren Seite, die auf der Wand der Kappe (1) eine zum Bett parallele Vertiefung (12) zur Aufnahme des stirnseitigen Arms (8) der Halterung (4) in der Verschließstellung definieret,
dadurch gekennzeichnet, daß sie auf einer Stange angeordnet aufweist :

— ein Verriegelungswerkzeug (20), das Seitenstäbe (21, 22) aufweist, deren Abstand ausreichend ist, damit sie sich auf zwei Bereiche des stirnseitigen Arms (8) der Halterung (4) abstützen können, die sich auf beiden Seiten des vorstehenden Höckers (9) befinden, wobei die Enden dieser Stäbe durch einen Quersteg (23) miteinander verbunden sind, dessen Dicke seine Einführung gegen die innere Führungs- und Andruckseite (10) des vorstehenden Höckers (9) ermöglicht,

— ein Entriegelungswerkzeug (30), das Seitenstäbe (31, 32) aufweist, die je in zwei Seitenhaken (33) enden, deren Abstand ausreichend ist, damit sie sich auf den genannten beiden Bereichen des stirnseitigen Arms (8) der Halterung (4) verhaken können, die sich auf beiden Seiten des vorstehenden Höckers (9) befinden, wobei die Seitenstäbe (31, 32) außerdem durch einen Quersteg (34) miteinander verbunden sind, der sich gegenüber den Haken in einer solchen Höhe befindet, daß er auf der äußeren Führungs- und Andruckseite (11) des vorstehenden Höckers (9) aufliegen kann.

2. Anordnung nach Anspruch 1, dadurch gekennzeichnet, daß die Kappe (1) in ihrer Symmetrieebene einen zweiten vorstehenden Höcker (14) aufweist, der mit dem vorstehenden Höcker zusammenwirkt, um einen Sitz (15) zu definieren, der parallel zum Bett liegt, und daß die Dicke des Querstegs (23) des Verriegelungswerkzeugs (20) so gewählt ist, daß dieser Steg in den Sitz eingeführt werden kann.

3. Anordnung nach Anspruch 1, dadurch gekennzeichnet, daß die Seitenstäbe (52, 53) des Verriegelungswerkzeugs (51) außerdem durch eine Platte (55) miteinander verbunden sind, die zwischen sich und dem Quersteg (54) eine Passage (56) für den vorstehenden Höcker (9) läßt.

4. Anordnung nach Anspruch 1, dadurch gekennzeichnet, daß die seitlichen Haken (64, 65) des Entriegelungswerkzeugs (63) außerdem durch eine Platte (67) miteinander verbunden sind, die verhindert, daß der Quersteg (66) dieses Werkzeugs an die Innenseite (10) des vorstehenden Höckers (9) gelangt.

5. Anordnung nach Anspruch 1, dadurch gekennzeichnet, daß das Verriegelungswerkzeug auf einen Achsenträger (58) montiert ist, der mit der Stange (50) fest verbunden ist, und daß es' eine Arbeitsstellung (51') und eine Ruhestellung (51) aufweist, wobei es in dieser letzteren Stellung einen spitzen Winkel mit der Stange (50) aufgrund der Rückholkraft einer Feder (59) einschließt, die das Werkzeug um die Achse (58) drehen läßt.

6. Anordnung nach Anspruch 1, dadurch gekennzeichnet, daß das Entriegelungswerkzeug auf einen Achsenträger (68) montiert ist, der mit der Stange (60) fest verbunden ist, und daß es eine Arbeitsstellung (61') und eine Ruhestellung (61) aufweist, wobei es in dieser letzeren Stellung einen stumpfen Winkel mit der Stange (60) aufgrund der Rückholkraft einer Feder (69) einschließt, die das Werkzeug um die Achse (68) drehen läßt.

7. Anordnung nach einem der Ansprüche 5 und 6, dadurch gekennzeichnet, daß der Träger aus Isoliermaterial besteht und daß er aus einem mit der Stange fest verbundenen äußeren Teil besteht, das einen inneren zylindrischen Sitz (103) aufweist, der ein inneres Teil (108) gleicher Achse enthält, und daß die Querstege (117) dieses Werkzeugs durch Öffnungen (104) in dem äußeren Teil hindurchgeführt sind und in dem inneren Teil (108) senkrecht zur Achse verankert sind, wobei ein Elastikband (130), das einerseits am inneren Teil (108) und andererseits am äußeren Teil befestigt ist, eine Drehbewegung des Werkzeugs um die Achse zwischen einer Arbeitsstellung und einer Ruhestellung erlaubt.

8. Anordnung nach Anspruch 7, dadurch gekennzeichnet, daß die im inneren Teil (108) verankerten Bereiche der Querstege aus Isolierstoff (117) bestehen.

9. Anordnung nach Anspruch 7, dadurch gekennzeichnet, daß das Elastikband über einen Zapfen (122) am äußeren Teil befestigt ist, der von außerhalb des Trägers zugänglich ist.

10. Anordnung nach einem der Ansprüche 5 und 6, dadurch gekennzeichnet, daß das Verriegelungswerkzeug und/oder das Entriegelungswerkzeug fest mit einem Block (210, 211) aus elastischem Isoliermaterial verbunden ist, der an einem Ende eines isolierenden Querträgers (205) befestigt ist, der selbst mit einem Ende einer Isolierstange (202) verbunden ist, wobei der elastische Block eine Ruhestellung und eine Arbeitsstellung für das Werkzeug definiert.

11. Anordnung nach Anspruch 10, dadurch gekennzeichnet, daß der Block (210, 211) auf das Ende des isolierenden Querträgers (205) und auf das Verriegelungs- (220) und/oder Entriegelungswerkzeug (212) aufgegossen ist, das einen Einsatz bildet.

12. Anordnung nach Anspruch 10, dadurch gekennzeichnet, daß der Querträger (205) aus einem Stück (206) aus agglomerierten Glasfasern besteht, das mit einer Hülle (207) aus isolierendem Material versehen ist.

13. Anordnung nach einem der Ansprüche 10 bis 12, dadurch gekennzeichnet, daß sie ein Verriegelungswerkzeug und ein Entriegelungswerkzeug aufweist, die je mit einem der beiden Enden desselben isolierenden Querträgers (205) fest verbunden sind, der selbst an einem Ende einer Isolierstange (202) sitzt.

0 040 384

# FIG.1

# FIG.2

1

# FIG.3A   FIG.3B

41

42

40

41

42

40

FIG.4A

FIG.4B

FIG.5A

FIG.5B

3

FIG.6

4

# FIG.7

# FIG.8

# FIG.9

# FIG.10

# FIG.11

# FIG.12

FIG.13

FIG.14

# FIG.15